# EUROPEAN PATENT SPECIFICATION

(11) **EP 2 296 460 B1**
(45) Date of publication and mention of the grant of the patent: **27.03.2019**
(21) Application number: 09751699.1
(22) Date of filing: 22.05.2009
(51) Int. Cl.: A01M 1/04, A01M 1/02, A01M 1/14

(54) **INSECT TRAP**
INSEKTENFALLE
PIÈGE À INSECTE

(30) Priority: 23.05.2008 US 55532 P
(43) Date of publication of application: 23.03.2011
(73) Proprietor: Ecolab USA Inc., St. Paul, MN 55102 (US)
(72) Inventor: JOHNSTON, Staci, Jo, Burnsville, MN 55306 (US); LARK, Larry, Mitch, St. Paul, MN 55116 (US); MATTS, Emory, H., South St. Paul, MN 55075 (US)
(74) Representative: Michalski Hüttermann & Partner Patentanwälte mbB
(86) International application number: PCT/US2009/045051
(87) International publication number: WO 2009/143471

(56) References cited:
- JP-A- 2003 070 402
- JP-A- 2003 070 402
- JP-A- 2008 029 206
- KR-Y1- 200 381 866
- US-A- 5 651 211
- US-A1- 2002 078 620
- US-B1- 6 772 556

## Description

### Field of the Invention

The present invention relates to an insect trap and, more particularly, an insect trap including UV light and bait.

US 2002/0078620 A1 refers to an insect trap using attractant light, comprising a source of insect attractant light and a housing that can be mounted on a generally planar or flat mounting surface. The housing and the source of light cooperate to form a bidirectional or a multidirectional, overlapping or non-overlapping, pattern of insect attractant light. The housing comprises one, two or more openings for the insect attractant light that is reflected and radiated onto the flat mounting surface. The housing and the source of insect attractant light can cooperate to form a light pattern directed in a continuous display pattern that can surround the housing. The housing openings further facilitate the entry of flying insect pests into the trap. As the insects enter the trap, they are immobilized on an insect immobilization surface mounted within the trap. Cooperation between direct radiant light, reflected light and the position of the housing and insect immobilization surface forms at least two, preferably non-overlapping, light displays that can substantially increase capture rates when compared to prior traps. The trap can also display a light pattern substantially surrounding the trap housing.

JP 2003 070402 refers to an insect-capturing tool that is mounted with three pieces of ultraviolet light LEDs in approximately horizontal direction at a vertically standing part of the insect-capturing tool main body. While, in the horizontal part, an insect-capturing paper as a capturing means, and a cover is put on it. The cover obtained by mixing a fluorescent material generating a blue light on receiving the ultraviolet light with a transparent acrylic resin and forming as a lattice form. By covering the cover over the insect-capturing paper having sticky property, noxious insects attracted to the ultraviolet light emitted from the ultraviolet light LEDs and gathered to the insect-capturing tool, perched on the cover irradiated by the ultraviolet light LEDs and emitting a blue colored fluorescent light, then fell and are captured by the insect-capturing paper. The ultraviolet light LEDs are small in size, consume low electric power, have the long life, can be produced at the low cost and can be carried to anywhere by using a dry battery as an electric source.

US 6 772 556 B1 refers to a trap for insects, without killing them. It employs a housing, with an opening on one end, and at least one layer of parallel strings or line stretched across that opening. The distance between each string corresponds to the width of the body of the target insect. Some type of attractant is used to attract the target insect. Farmers, entomologists, and hobbyists will find this trap useful since it captures insects without killing them, thus permitting identification and further study.

### Background of the Invention

Insect traps with insect attractant light sources and immobilization devices are commonly used to attract and trap insects within the traps. The present invention addresses the problems associated with the prior art devices and provides for an insect trap including UV light and bait.

### Summary of the Invention

Problems associated with prior devices are addressed by embodiments of the present invention and will be understood by reading and understanding the present specification. The following summary is made by way of example and not by way of limitation. It is merely provided to aid the reader in understanding some of the aspects of the invention. The invention according to claim 1 is directed to an insect trap which comprises a housing, an ultraviolet light with a peak wavelength of 340 to 380 nm operatively connected to the housing, and a bait including an attractant proximate the ultraviolet light, wherein the bait has fluorescent properties, wherein the ultraviolet light and the bait in the housing have a synergistic effect that is greater than a sum of the ultraviolet light alone and the bait alone; and further comprising a glueboard proximate the ultraviolet light.

An embodiment of the invention comprises a housing, an ultraviolet light, a bait, and a gluegboard, wherein the bait has fluorescent properties; and further comprising a glueboard proximate the ultraviolet light. The housing includes a cavity and an opening providing access to the cavity. The ultraviolet light has a peak wavelength of 340 to 380 nm and is operatively connected to the housing within the cavity. The ultraviolet light emits light through the opening of the housing. The bait includes an attractant within the cavity proximate the ultraviolet light, wherein the bait has fluorescent properties. The glueboard is positioned within the cavity. The ultraviolet light and the bait in the housing have a synergistic effect that is greater than a sum of the ultraviolet light alone and the bait alone.

An embodiment of the invention comprises a housing, an ultraviolet light, and a bait, wherein the bait has fluorescent properties. The housing has a front, a back, a bottom, an opening, and an internal reflective surface. The opening is upwardly facing for insect entry, and the back is configured and arranged to be mounted on a mounting surface. The ultraviolet light has a peak wavelength of 340 to 380 nm and is operatively connected to the housing. The ultraviolet light is placed in the housing below an edge of the upwardly facing opening. The internal reflective surface directs light from the ultraviolet light onto the mounting surface and forms a diffused light pattern on the mounting surface. The bait is operatively connected to at least one of the front, the back, and the bottom. The ultraviolet light and the bait in the housing have a synergistic effect that is greater than a sum of the ultraviolet light alone and the bait alone.

The invention according to claim 9 discloses a method of increasing efficacy of an insect trap including a housing, comprising: operatively connecting an ultraviolet light with a peak wavelength of 340 to 380 nm to the housing, positioning a bait including an attractant proximate the ultraviolet light, wherein the bait has fluorescent properties, wherein the ultraviolet light and the bait in the housing have a synergistic effect that is greater than a sum of the ultraviolet light alone and the bait alone, and supplying power to the ultraviolet light.

### Brief Description of the Drawings

The present invention can be more easily understood, and further advantages and uses thereof can be more readily apparent, when considered in view of the detailed description and the following Figures in which:
Figure 1 is an exploded perspective view of an insect bait station but not for use with the present invention;
Figure 2 is a perspective view of a base for use with the insect bait station shown in Figure 1;
Figure 3 is a perspective view of another embodiment base for use with the insect bait station shown in Figure 1;
Figure 4 is a perspective view of another embodiment insect bait station but not for use with the present invention;
Figure 5 is a perspective view of the insect bait station shown in Figure 4 with the cover in an open position;
Figure 6 is a perspective view of an embodiment insect bait station for use with the present invention;
Figure 7 is a graph showing the number of dead flies in an insect bait station with lighting versus the number of dead flies in an insect bait station without lighting;
Figure 8 is a table showing the number and the percentage of dead flies on the insect bait station's glueboard and on the floor over time for insect bait stations with and without bait;
Figure 9 is a graph showing the percentage of dead flies on the insect bait station's glueboard and on the floor over time for insect bait stations with and without bait;
Figure 10 is a table showing the number and the percentage of dead flies on the insect bait station's glueboard and on the floor over time for insect bait stations with UV light and bait, no UV light and no bait, UV light and no bait, and no UV light and bait;
Figure 11 is a graph showing the number of dead flies in an insect bait station with bait versus the number of dead flies in an insect bait station without bait;
Figure 12 is a graph showing the number of dead flies on the floor for UV light and bait together versus separate;
Figure 13 is a table showing activity of flies with regard to a bait station including UV light, bait, and a glueboard;
Figure 14 is a graph showing the number of dead flies at 24 hours comparing bait exposed to UV light versus fresh bait;
Figure 15 is a graph showing the number of dead flies at 48 hours comparing bait exposed to UV light versus fresh bait;
Figure 16 is a graph showing the number of dead flies over time;
Figure 17 is a perspective view of another embodiment insect bait station but not for use with the present invention; and
Figure 18 is a cross section view taken along the lines 18-18 in Figure 17.

In accordance with common practice, the various described features are not drawn to scale but are drawn to emphasize specific features relevant to the present invention. Reference characters denote like elements throughout the Figures and the text.

### Detailed Description of a Preferred Embodiment

In the following detailed description, reference is made to the accompanying drawings, which form a part hereof, and in which is shown by way of illustration embodiments in which the inventions may be practiced. These embodiments are described in sufficient detail to enable those skilled in the art to practice the invention, and it is to be understood that other embodiments may be utilized and mechanical changes may be made without departing from the scope of the present invention. The following detailed description is, therefore, not to be taken in a limiting sense, and the scope of the present invention is defined only by the claims.

The term "insect trap" is used herein to include an insect trap or an insect station including the following: a light source, a bait, and a glueboard. The insect trap includes a housing made of plastic or any other suitable material.

The term "bait" is used herein to include a bait including an attractant, a poison, and a fluorescent property.

The present invention is an insect bait station that could be used in indoor and outdoor locations utilizing ultraviolet ("UV") light such as a light emitting diode ("LED") with a peak wavelength between approximately 340 and 380 nanometers ("nm"), preferably approximately 350 to 370 nm, and bait. The UV light is used in combination with the bait to increase attraction to the insect bait station. Attraction is increased due to the UV light, the attractants of the bait, and any fluorescent properties of the bait. An example of suitable bait that could be used is ELECTOR™ bait manufactured by Elanco.

According to the invention, the ultraviolet light and the fluorescent bait used together have a synergistic effect that is greater than a sum of the ultraviolet light used alone and the bait used alone. Initial testing found that a relatively small amount of UV light used in combination with the fluorescent bait in a bait station increased attraction and efficacy by approximately at least three times as compared to bait alone. This initial testing is described in Example 1.

Furthermore, the relatively small amount of UV light required to increase the bait station efficacy could enable the UV light to be powered with batteries rather than a power cord. Using batteries could also allow the bait station to be portable and used in locations where power outlets are not available. In order to save battery power, the LEDs could be pulsed or otherwise turned on and off, however, any florescent properties of the bait would make the bait seem to constantly glow.

The bait could be regularly wetted or allowed to drip onto a porous surface so that the bait has enough pigment to keep fluorescing longer. The bait station could also include a container, perhaps holding liquid, beneath the bait to contain any flying insects that have died while feeding on the bait.

The present invention is an insect bait station including a light source, at least one glueboard, and bait. Existing light traps typically use an electric zapper or a mechanical glueboard to kill or trap flying insects. However, not all flying insects attracted to the light land and are killed by the electric zapper or become trapped on the glueboard. This invention utilizes bait with an attractant in combination with a glueboard light trap to increase the overall efficacy of the bait station via two modes. First, overall attraction to the device is increased with the addition of the fluorescent bait attractant. It is believed that the attraction of the UV and the fluorescent bait together in the same device is greater than the sum of the attraction to these separately, one using UV and the other using bait. Second, the overall efficacy of the device is increased because flying insects that do not land on the glueboard but consume the bait are killed by the bait. Furthermore, this embodiment provides efficacy after the glueboards are full or otherwise not operational due to moisture, dust, or other contaminants because of the bait.

Initial testing of a glueboard light trap with bait showed an average increase in the efficacy of approximately 80%. Furthermore, the testing showed continued efficacy of the trap when the glueboards were removed from the trap. This initial testing is described in Example 2.

An embodiment of the present invention could be used with the STEALTH™ MAXIMA flying insect trap manufactured by Ecolab Inc. Bait could be mounted in between the bulbs in a similar fashion as the glueboard bracket disclosed in U.S. Patent Application Serial No. 11/928, 623. Bait could also be mounted proximate the front, the back, and / or the bottom of the trap. In addition, bait could also be applied to the glueboards that are mounted proximate the front, the back, the bottom, and / or in between the bulbs. The bait could also be in a pouch / bait station that slides into and out of the brackets or connectors for easy installation and maintenance. The bait could also be a disposable type pouch that is used then discarded when the bait is gone or when the active ingredient(s) loses efficacy due to time, UV degradation, or other factors.

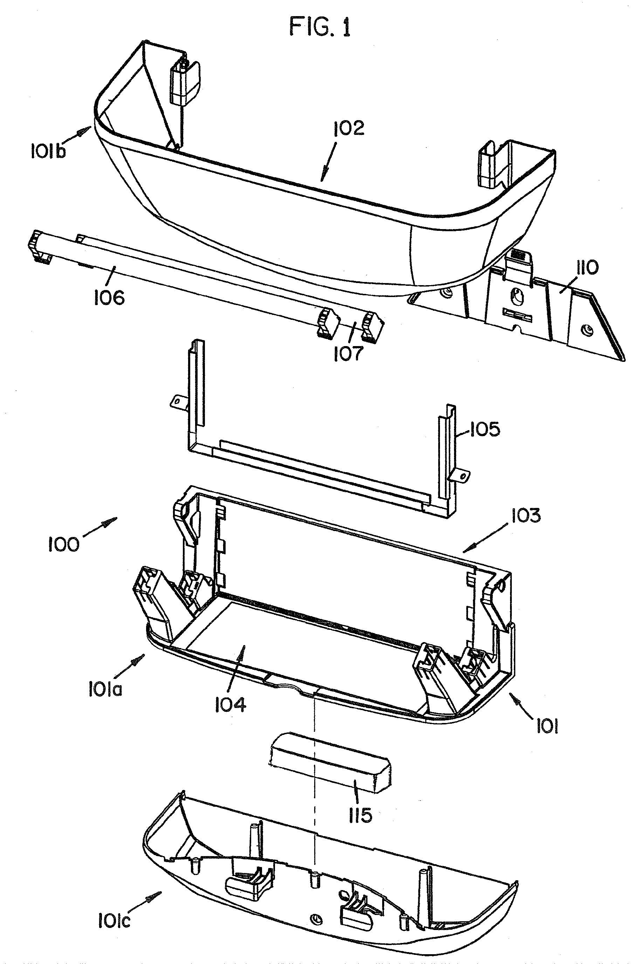

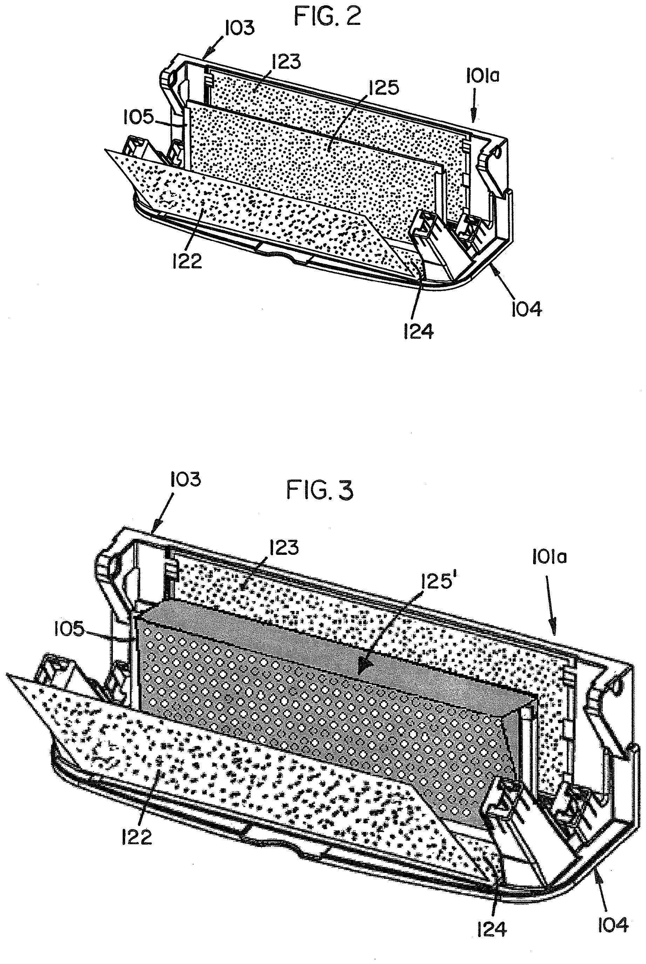

An example of a bait station is shown in Figure 1. The bait station 100 includes a housing 101 having a base 101a, a cover 101b, and a support 101c. The base 101a is operatively connected to the support 101c, and the cover 101b is operatively connected to the base 101a. The cover 101b includes a front 102. The base 101a includes a back 103 and a bottom 104 and is configured and arranged to be operatively connected to an optional bracket 105. Bulbs 106 and 107 are operatively connected to the base 101a proximate opposing sides of the bracket 105. The bulbs 106 and 107 emit light through the opening proximate the top of the housing 101, and this is commonly referred to as an "uplite". A mounting bracket 110 is used to interconnect the base 101a and a mounting structure such as a wall. A battery 115 is operatively connected to the base 101a and supplies power to the bulbs 106 and 107. The battery 115 could be positioned within a cavity of the support 101c or mounted to the front of the support 101c. Alternatively, a power cord could be used in lieu of a battery. As shown in Figure 2, the bait station could include product such as a glueboard, a bait, or a combination glueboard and bait in several locations. A product 122 could be positioned proximate the front 102 of the housing 101 (not shown in Figure 2), a product 123 could be positioned proximate the back 103 of the housing, a product 124 could be positioned proximate the bottom 104 of the housing, and a product 125 could be positioned proximate the bracket 105 of the housing 101. As shown in Figure 3, a trough 125' could be positioned proximate the bracket 105 of the housing 101, and the trough 125' is configured and arranged to receive bait such as granules or pellets. It is recognized that any suitable bait station could be used.

The bait could be in granular, pellet, liquid, or solid block form. The bait could be a pouch of bait. The bait could also be incorporated into the glueboard (in the glue). The bait could also be painted, sprayed, or otherwise coated on the housing or impregnated into the housing.

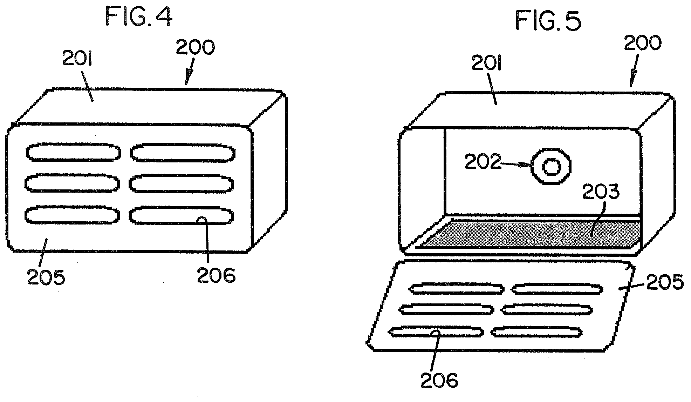

An embodiment is using a UV light with a bait station, and this embodiment is shown in Figures 4 and 5. The bait station 200 is portable and, based on the relatively small amount of light required, the UV light could be battery powered. The bait station 200 includes a base 201 including at least one LED 202 and bait 203. A cover 205 is operatively connected to the base 201 with a hinge, and the cover 205 includes openings or slots 206 to allow insects to enter the bait station 200. This also provides a discrete appearance. The bait station 200 could be used in indoor and outdoor locations. The bait station 200 has the potential for glueboards as well as bait. The UV light could be one or more LEDs. The bait could be in granular, liquid, or solid block form.

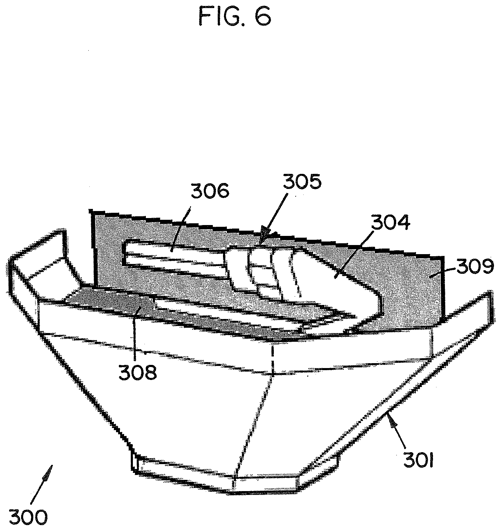

The present invention is using a UV light with a bait station and a glueboard, and this embodiment is shown in Figure 6. The bait station 300 includes a housing 301 to which a mounting arm 304 is operatively connected. The mounting arm 304 includes a socket 305 configured and arranged to receive a bulb 306. Preferably, the mounting arm 304 and the bulb 306 are with a cavity of the housing 301. A glueboard 308 is positioned within the cavity below the bulb 306, and bait 309 extends vertically and is operatively connected proximate the rear of the housing 301.

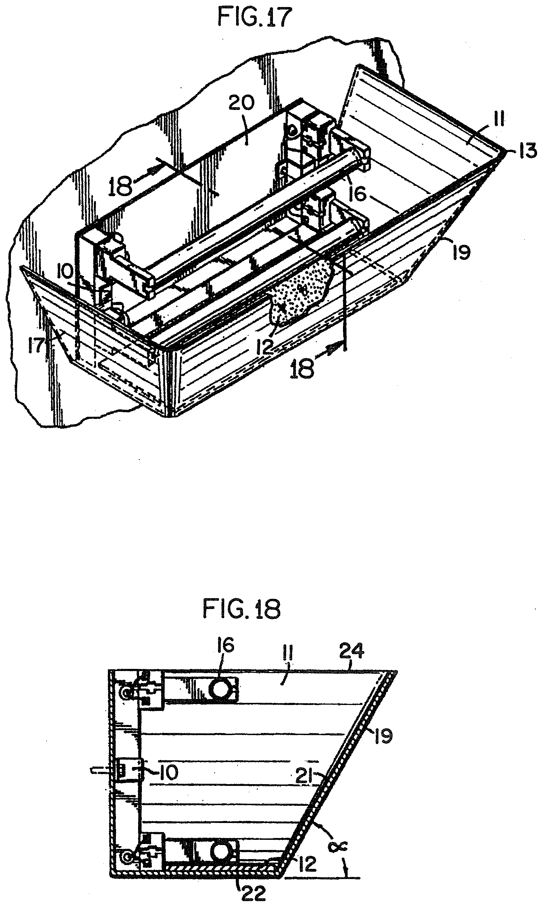

Figure 17 shows another embodiment flying insect trap. The flying insect trap comprises mounting means 10 comprising a bracket portion of the housing. Such brackets can be screw attached to the vertical surface 20. The housing displays an internal reflective surface 11 comprising an aluminum foil or metallized polyester surface. The internal housing surface contains a pressure sensitive adhesive surface 12 positioned below the light source or illumination units 16 opposite to the upwardly facing opening defined by the top 13 of the walls 19 of the housing. The external walls 19 of the housing are configured at a 60° angle to the horizontal surface 22 to optimize the area of ingress and to optimize the reflected display of light on the vertical surface from the flying insect trap. The exterior of the housing 19 displays a color contrasting to the color of the vertical surface 20. The illumination units 16 are fluorescent ultraviolet sources in sockets 17 that are commonly attached to household or service power. The adhesive surface 12 rests upon a bottom portion 18 which is a part of the housing 19. The flying insect trap is mounted on a vertical surface 20 such that the illumination units 16 are not directly viewed by an occupant of the installation locus. A ballast (not shown) can be placed in the housing beneath the adhesive 12.

Figure 18 shows a cross section at 18-18 in Figure 17. The flying insect trap can be mounted on the vertical surface using mounting means 10 which in Figure 18 comprises a bracket and screw device. The trap is made using the housing 19 with an angled reflective surface 21 that aids in directing reflected light onto the vertical surface 20. The illumination sources 16 are positioned within the housing to radiate light through the upwardly facing opening 24 and onto the reflecting surface 21. Adhesive surface 12 rests upon a horizontal housing surface 22. This flying insect trap is disclosed in U.S. Patents 5,365,690 and 5,505,017.

### Example 1

Testing comparing the use of bait stations with and without UV lights was conducted. The protocol for the testing was as follows:

### Supplies Needed:

1. 6 standard 60.96 cm by 60.96 cm by 60.96 cm (2 feet x 2 feet x 2 feet) boxes with plastic wrap tops;
2. 3 bait stations without UV lights - containers including 50 grams of ELECTOR™ bait, each container included three holes 0.635 cm (¼ inch) in diameter to allow the flies to enter and exit the container;
3. 3 bait stations with UV lights - containers including 50 grams of ELECTOR™ bait and a bracket connecting UV LED lights (quantity of 20 Nichia NSSU100AT LEDs, with a peak wavelength of approximately 365 nm, mounted on a single board per bait station) above the bait and inside the container, each container included three holes 0.635 cm (¼ inch) in diameter to allow the flies to enter and exit the container;
4. house fly food;
5. small water bottles; and
6. house flies.

### Procedures:

One bait station was placed in each box. Thirty (30) flies, 1 tablespoon house fly food sprinkled with 1 teaspoon sugar, and one bottle of water were placed in each box. The boxes were placed randomly around the room. A temperature of approximately 24.4° C (75° F) was maintained, and 12 hour day and 12 hour night cycles were provided. Data points of the number of dead flies in the box were taken at 1 hour, 2 hours, 4 hours, 24 hours, 48 hours, 72 hours, and 1 week. When taking data points, the number of flies in each box were counted to make sure any flies that have escaped are not included in the number of dead flies in the box.

### Results:

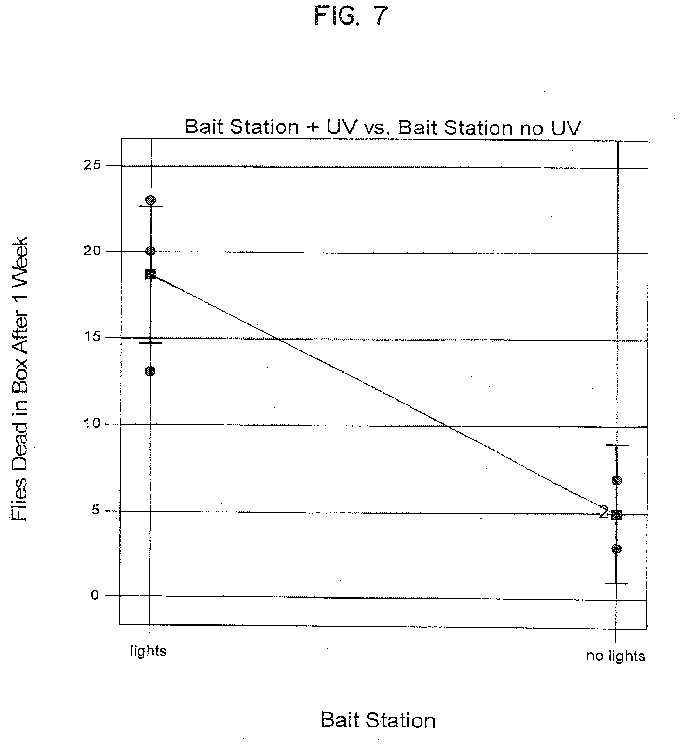

The results after 1 week are shown in Figure 7. The average number of flies dead after 1 week using the bait station with UV lights was 18.7, whereas the average number of flies dead after 1 week using the bait station without UV lights was 5. The addition of UV lights resulted in a significant increase in efficacy of the bait station by approximately 274% (or 3.7 times higher).

### Example 2

Testing comparing the effect of adding bait to a standard flying insect trap was conducted. The goal was to evaluate the improvement in attraction of UV light and bait together in the same flying insect trap versus UV light and bait in separate conditions. The protocol for the testing was as follows:

### Procedures:

A STEALTH™ DECORA flying insect trap was hung in a standard Ecolab Inc. flight room with bait, and a STEALTH™ DECORA flying insect trap was hung in a standard Ecolab Inc. flight room without bait as a control. 128 flies were released in each room. Flies caught on the glueboards and dead on the floor were counted each hour for a total of 4 hours. The glueboards were then removed and, at periods of 24 hours, 48 hours, and 72 hours, the flies dead on the floor were counted to determine if any flies were eating the bait and not landing on the glueboards.

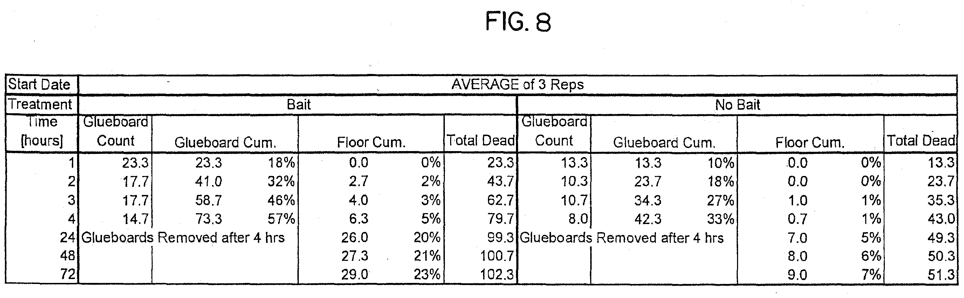

The flying insect trap including the bait and the control (no bait) were run in two separate rooms over the same 72 hour period. The units were then switched between the rooms, and the test was repeated twice, for a total of three tests. The data is shown in Figure 8.

### Results:

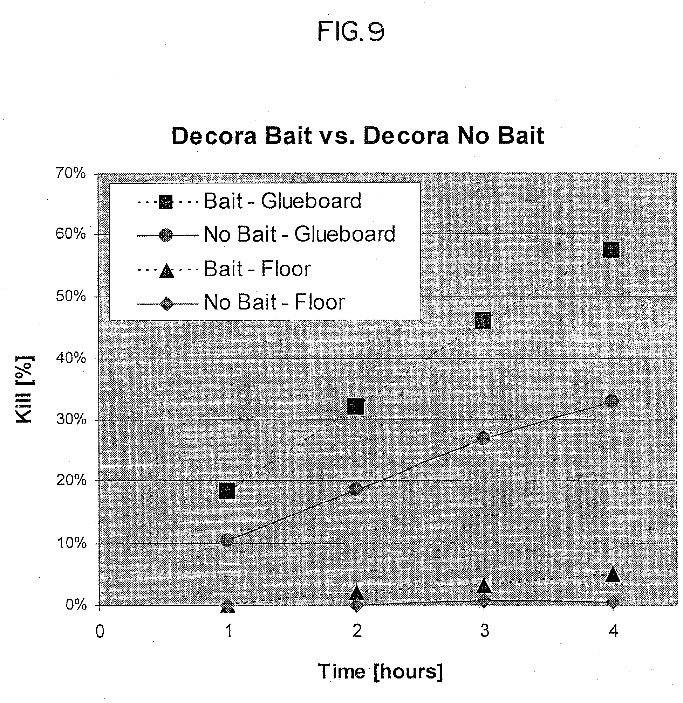

As shown in Figures 8 and 9, the results showed the addition of the bait increased the catch on the glueboards by approximately 80% on average. Furthermore, the results showed an increase in flies dead on the floor over the first 4 hours, meaning flies were eating the bait but not getting caught on the glueboards. Also, after the glueboards were removed, the flies continued to die due to the flies consuming the bait. Removing the glueboards after 4 hours also demonstrated the efficacy of the fly traps without any glueboards, which could be useful in situations where glueboards are full or not functional due to age, wet conditions, dust, or any other contaminants or factors.

### Example 3

Testing comparing the effect of adding bait to a standard flying insect trap was conducted. The goal was to evaluate the improvement in attraction of UV light and bait together in the same flying insect trap versus UV light and bait in separate conditions. The protocol for the testing was as follows:

### Procedures:

Two identical standard Ecolab Inc. flight rooms were used at the same time, each with two standard STEALTH™ MAXIMA flying insect traps hung in equivalent locations in each room. Each trap contained a standard glueboard. Each of the four STEALTH™ MAXIMA flying insect traps was set up in one of the following configurations:
1. UV light and Bait: lights on, bait added to center bracket;
2. No UV light and No Bait: lights off, no bait added to center bracket;
3. UV light and No Bait: lights on, no bait added to center bracket; and
4. No UV light and Bait: lights off, bait added to center bracket.

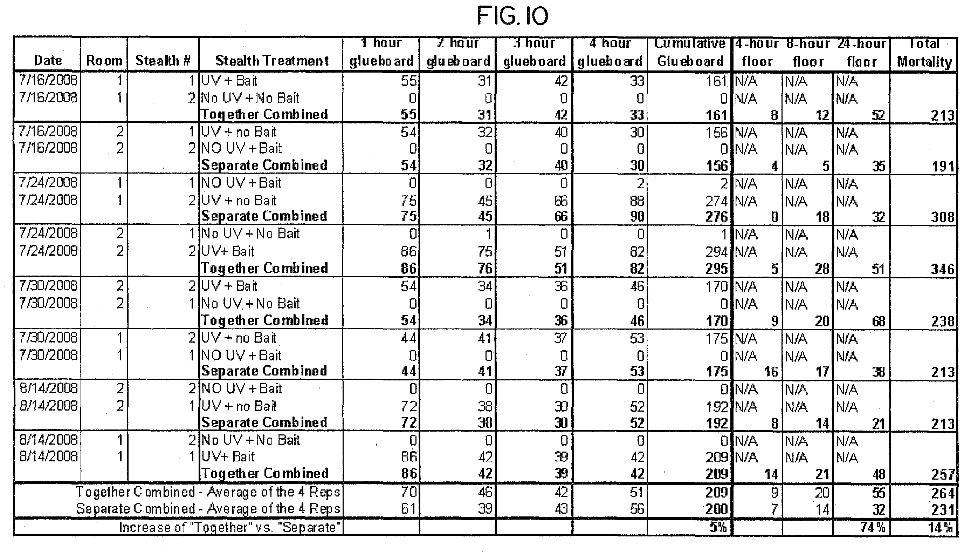

The rooms and lights were then paired so as to test all combinations of configurations over four separate replications. For each replication, 500 flies were released in each flight room. The fly catch was recorded on the glueboard at 1 hour, 2 hours, 3 hours, and 4 hours. At each point the glueboard was replaced with a new glueboard. At 4 hours, all STEALTH™ MAXIMA flying insect traps (with glueboards and bait) were removed from both flight rooms. Fly death in each room was then monitored at the 4 hour point, 8 hour point, and 24 hour point. The test was repeated four times. The data is shown in Figure 10.

### Results:

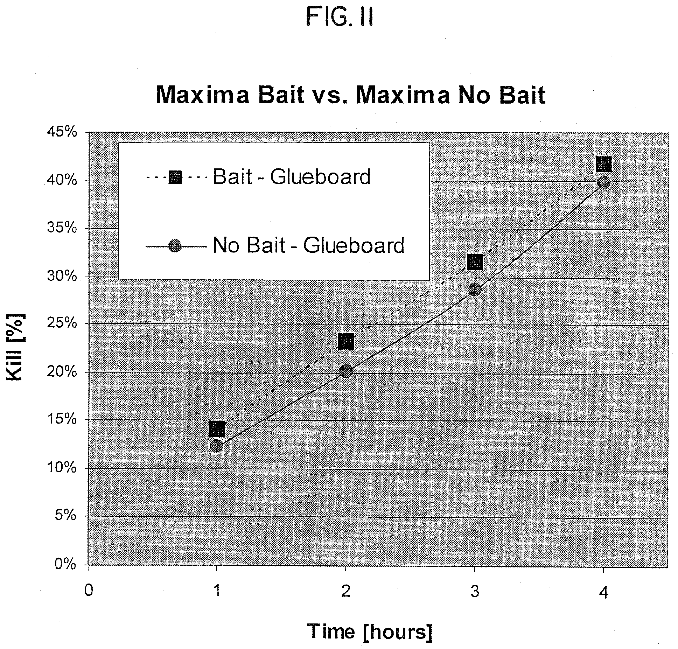

In this configuration, as shown in Figure 11, the number of flies caught on the glueboards through 4 hours was not significantly higher for the UV light and bait together versus the UV light alone (approximately 5% increase). When compared to Example 2, this example demonstrates that the increase in glueboard catch resulting from adding bait to an existing UV light flying insect trap will vary and depends on the amount of UV light attraction of the light on its own, as well as the position of the bait within the flying insect trap.

The STEALTH™ MAXIMA flying insect trap used in this example has a relatively high amount of UV light and resulting attraction (2 x 25W bulbs). Comparatively, the UV light and resulting attraction of the STEALTH™ DECORA flying insect trap used in Example 2 (1 x 9W bulb) and the LED array used in Example 1 (20 x 0.1W) were both much lower. This demonstrates that at the lower levels of UV light, there is a much more pronounced increase in attraction when adding bait to the UV light. However, as the UV light reaches a threshold in which the light attraction overpowers the attraction of the bait, there is no significant improvement in attraction when using UV light and bait. This implies the most relative benefit from combining UV light and bait to increase solely attraction may be reached with a bait station with a relatively small amount of UV light added. This design has the benefit of using small amounts of UV light that can be generated from small LEDs that could be battery powered.

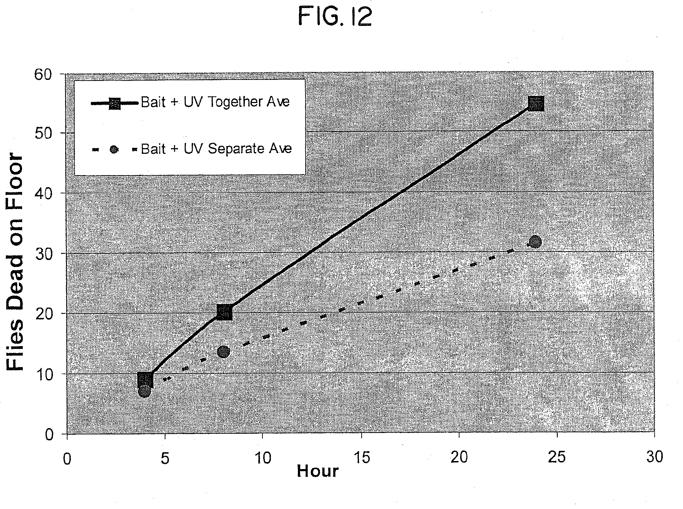

This test configuration shows that regardless of increase (or no increase) in glueboard catch, the overall performance of killing flies, including those that are not caught on the glueboard, increases by adding the bait. In this example, even though there was no significant increase in glueboard catch, the number of flies dead in the room after 24 hours for the UV light and bait together in the same flying insect trap was approximately 74% higher than the total flies dead after 24 hours for bait without the UV light. This increase from 32 to 55 flies killed on average when putting the UV light and bait together versus separate is shown in Figure 12.

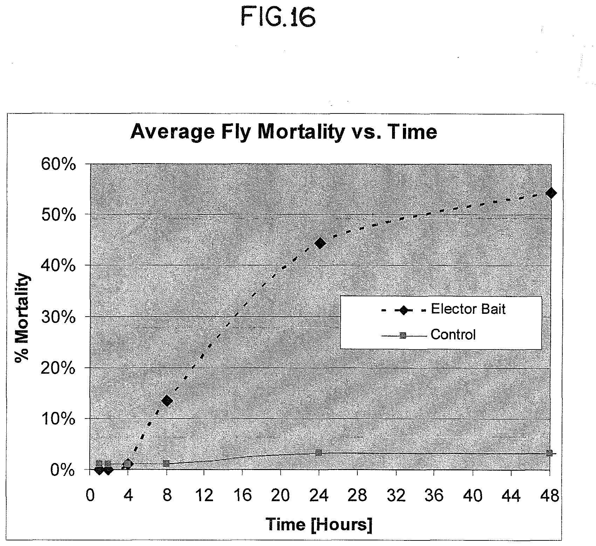

This finding indicates that even though the initial attraction of the UV light and bait versus UV light alone was not significantly different (based on the glueboard catch), many flies that were initially attracted to the UV light and bait consumed the bait but did not get caught on the glueboard. These flies then left the flying insect trap and died at a later time (between 4 and 24 hours) from the insecticide in the bait. This is consistent with the known kill time of the fly bait used in the study, which is shown in Figure 16. As shown in Figure 10, the total mortality (264 dead flies) of the combined UV light and bait in the same housing is greater than the total mortality (231 dead flies) of the combined UV light and bait in separate housings.

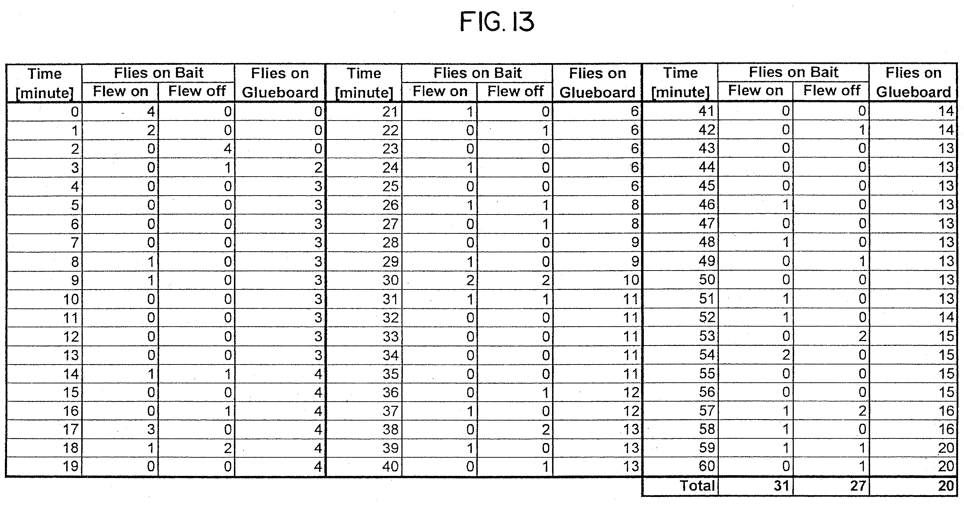

An additional observation test was conducted to validate the theory that flies were attracted to the UV light and bait, ate the bait, and then exited the light without getting caught on the glueboard. A STEALTH™ MAXIMA flying insect trap configured with bait and a glueboard was placed in a standard Ecolab Inc. flight room. 128 flies were released in the room, and fly activity on the bait and glueboard was counted every minute over a 1 hour period. Results of this test are shown in Figure 13. Over the 1 hour period, 32 fly landings were observed on the bait and 29 take-offs. This indicates relatively high activity on the bait compared to the total 20 flies that were caught on the glueboard. Furthermore, many other flies were observed landing on other parts of the STEALTH™ MAXIMA flying insect trap (not on the bait or glueboard) and flying away before ever getting caught on the glueboard. This supports the concept that many flies will be attracted to the UV light, but will not ultimately land on the glueboard. For these flies, the addition of the bait increases the efficacy of the device as a whole. Furthermore, these observations indicate that the addition of more bait or insecticide to other surfaces within the flying insect trap would be beneficial to improve overall efficacy.

Summarizing this example, the findings indicate that adding bait to higher power UV lights does not appear to improve attraction or catch on the glueboard. However, it still increases performance by killing flies that do not ultimately land on the glueboard. In this case it was approximately a 74% increase in non-glueboard total fly death. This implies that great benefit can also be seen for instances when the glueboards are full and cannot hold more flies, or when the glueboards are not present or effective for other reasons (e.g., old, wet, covered in dust, etc.).

### Example 4

One challenge to adding UV light and bait together is that the UV light can degrade the bait attractant or efficacy properties. To demonstrate the feasibility of this invention, the bait used in this study was aged and tested under the following study.

### Procedure:

Samples of ELECTOR™ bait manufactured by Elanco were placed in a Petri dish under direct UV light from the STEALTH™ MAXIMA flying insect trap (2 bulbs x 25W) to age for 30 days and 60 days. The bait was then removed and not disturbed, so that the outer layer of bait with the visual UV light degradation was the only bait surface that was exposed for subsequent testing. The aged bait was then tested using the same method as described in Example 1. Each bait sample was placed in a 60.96 cm by 60.96 cm by 60.96 cm (2 feet by 2 feet by 2 feet) box with alternative food (sugar) and water. Ten flies were released and monitored over 48 hours for mortality. Efficacy was recorded at intervals of 1 hour, 2 hours, 4 hours, 8 hours, 24 hours, and 48 hours. Three samples each of the 30 day aged, 60 day aged, and fresh bait were tested for a total of three replicated tests.

### Results:

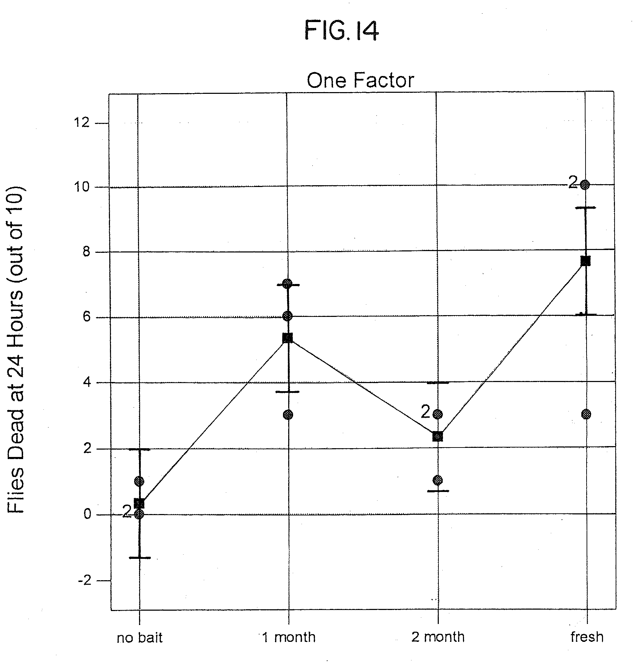

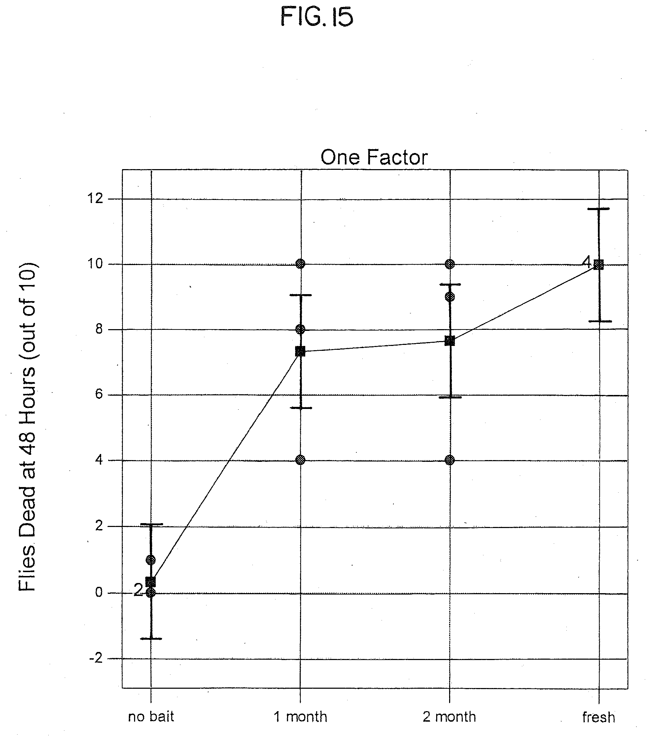

Death recorded of each sample with averages and 95% confidence intervals are shown in Figure 14 for 24 hours and Figure 15 for 48 hours. At 24 hours, the 30 day aged bait performed comparable to the fresh bait; however, the 60 day aged bait performed significantly lower than the fresh bait. At 48 hours, the 30 day and 60 day aged baits performed comparable to the fresh bait. This test demonstrates that bait performance does start to degrade between 30 and 60 days exposure to UV light present in a typical flying insect trap such as the STEALTH™ MAXIMA flying insect trap. However, performance up through 30 days of aging was comparable to fresh bait, demonstrating the feasibility of using this specific bait in the invention. Furthermore, this demonstrates a 30 day life of bait with the UV light can be expected, and a 30 day service cycle to replace the bait after 30 days would maintain efficacy of bait comparable to fresh.

The above specification, examples and data provide a complete description of the manufacture and use of the composition of the invention. Since many embodiments of the invention can be made without departing from the scope of the invention, the invention resides in the claims hereinafter appended.

## Claims

1. An insect trap (100), comprising:
a housing (101);
an ultraviolet light with a peak wavelength of 340 to 380 nm operatively connected to the housing (101);
a bait (203) including an attractant proximate the ultraviolet light, wherein the bait (203) has fluorescent properties, wherein the ultraviolet light and the bait in the housing have a synergistic effect that is greater than a sum of the ultraviolet light alone and the bait alone; and
further comprising a glueboard (308) proximate the ultraviolet light.

2. The insect trap (100) of claim 1, wherein the ultraviolet light is powered with a battery (115).

3. The insect trap (100) of claim 1 or 2, wherein the bait (203) is selected from the group consisting of a solid block bait (203), granular bait (203), bait (203) pellets, a liquid bait (203), a pouch of bait (203), a glueboard (308) including bait (203), bait (203) applied onto a surface of the housing (101), and bait (203) impregnated into a surface of the housing (101).

4. An insect trap (100) of claims 1 to 3, comprising:
a housing (101) including a cavity and an opening providing access to the cavity;
an ultraviolet light with a peak wavelength of 340 to 380 nm operatively connected to the housing (101) within the cavity, the ultraviolet light emitting light through the opening of the housing (101);
a bait (203) including an attractant within the cavity proximate the ultraviolet light;
a glueboard (308) within the cavity.

5. An insect trap (100) of claims 1 to 4, comprising:
a housing (101) having a front (102), a back (103), a bottom (104), an opening, and an internal reflective surface, the opening being upwardly facing for insect entry, the back being configured and arranged to be mounted on a mounting surface;
an ultraviolet light with a peak wavelength of 340 to 380 nm operatively connected to the housing (101), the ultraviolet light being placed in the housing (101) below an edge of the upwardly facing opening, the internal reflective surface (11) directing light from the ultraviolet light onto the mounting surface forming a diffused light pattern on the mounting surface;
a bait (203) operatively connected to at least one of the front (102), the back (103), and the bottom (104).

6. The insect trap (100) of claim 5, further comprising a bracket between two bulbs operatively connected to the housing (101), the bait (203) being operatively connected to at least one of the front (102), the back, (103) the bottom (104), and the bracket (105).

7. The insect trap (100) of claim 5 or 6, further comprising a glueboard (308) operatively connected to at least one of the front (102), the back, (103) the bottom (104), and the bracket (105).

8. The insect trap (100) of claims 5 to 7, wherein the glueboard (308) includes an attractant.

9. A method of increasing efficacy of an insect trap (100) of claims 1 to 8, the insect trap (100) including a housing (101), comprising:
operatively connecting an ultraviolet light with a peak wavelength of 340 to 380 nm to the housing (101);
positioning a bait (203) including an attractant proximate the ultraviolet light, wherein the bait (203) has fluorescent properties, wherein the ultraviolet light and the bait in the housing have a synergistic effect that is greater than a sum of the ultraviolet light alone and the bait alone;
supplying power to the ultraviolet light; and
further comprising positioning a glueboard (308) proximate the ultraviolet light and the bait (203).

10. The method of claim 9, wherein power is supplied with a battery (115).

## Patentansprüche

1. Insektenfalle (100), Folgendes umfassend:
ein Gehäuse (101);
ein ultraviolettes Licht mit einer Spitzenwellenlänge von 340 bis 380 nm, das funktionsfähig mit dem Gehäuse (101) verbunden ist;
ein Köder (203), der einen Lockstoff in der Nähe des ultravioletten Lichts beinhaltet, wobei der Köder (203) fluoreszierende Eigenschaften aufweist, wobei das ultraviolette Licht und der Köder im Gehäuse eine synergistische Wirkung haben, die größer ist als die Summe des ultravioletten Lichts allein und des Köders allein; und
ferner umfassend eine Klebeplatte (308) in der Nähe des ultravioletten Lichts.

2. Insektenfalle (100) nach Anspruch 1, wobei das ultraviolette Licht mit einer Batterie (115) betrieben wird.

3. Insektenfalle (100) nach Anspruch 1 oder 2, wobei der Köder (203) ausgewählt ist aus der Gruppe bestehend aus einem festen Blockköder (203), einem granulierten Köder (203), Köder-Pellets (203), einem flüssigen Köder (203), einem Beutel mit Ködern (203), einer Klebeplatte (308) mit Ködern (203), einem auf die Oberfläche des Gehäuses (101) aufgebrachten Köder (203) und einem Köder (203), der in der Fläche des Gehäuses (101) imprägniert ist.

4. Insektenfalle (100) nach den Ansprüchen 1 bis 3, Folgendes umfassend:
ein Gehäuse (101) mit einem Hohlraum und einer Öffnung, die den Zugang zum Hohlraum bereitstellt;
ein ultraviolettes Licht mit einer Spitzenwellenlänge von 340 bis 380 nm, das funktionsfähig mit dem Gehäuse (101) innerhalb des Hohlraums verbunden ist, wobei das ultraviolette Licht durch die Öffnung des Gehäuses Licht (101) emittiert;
ein Köder (203) mit einem Lockmittel innerhalb des Hohlraums in der Nähe des ultravioletten Lichts;
eine Klebeplatte (308) in dem Hohlraum.

5. Insektenfalle (100) nach den Ansprüchen 1 bis 4, Folgendes umfassend:
ein Gehäuse (101) mit einer Vorderseite (102), einer Rückseite (103), einer Unterseite (104), einer Öffnung und einer inneren reflektierenden Oberfläche, wobei die Öffnung nach oben für den Eintritt von Insekten gerichtet ist, wobei die Rückseite konfiguriert und angeordnet ist, um auf einer Montagefläche montiert zu werden;
ein ultraviolettes Licht mit einer Spitzenwellenlänge von 340 bis 380 nm, das funktionsfähig mit dem Gehäuse (101) verbunden ist, wobei das ultraviolette Licht in dem Gehäuse (101) unterhalb einer Kante der nach oben gerichteten Öffnung angeordnet ist, wobei die innere reflektierende Oberfläche (11) das Licht des ultravioletten Lichts auf die Montagefläche lenkt und ein diffuses Lichtmuster auf der Montagefläche bildet;
ein Köder (203), der funktionsfähig mit mindestens einer der Vorderseiten (102), der Rückseite (103) und der Unterseite (104) verbunden ist.

6. Insektenfalle (100) nach Anspruch 5, ferner umfassend eine Halterung zwischen zwei Lampen, die funktionsfähig mit dem Gehäuse (101) verbunden sind, wobei der Köder (203) funktionsfähig mit mindestens einer der Vorderseite (102), der Rückseite (103), der Unterseite (104) und der Halterung (105) verbunden ist.

7. Insektenfalle (100) nach Anspruch 5 oder 6, ferner umfassend eine Klebeplatte (308), die funktionsfähig mit mindestens einer der Vorderseiten (102), der Rückseite (103), der Unterseite (104) und der Halterung (105) verbunden ist.

8. Insektenfalle (100) nach den Ansprüchen 5 bis 7, wobei die Klebeplatte (308) ein Lockmittel beinhaltet.

9. Verfahren zum Erhöhen der Wirksamkeit einer Insektenfalle (100) nach den Ansprüchen 1 bis 8, wobei die Insektenfalle (100) ein Gehäuse (101) beinhaltet, Folgendes umfassend:
funktionsfähiges Verbinden eines ultravioletten Lichts mit einer Spitzenwellenlänge von 340 bis 380 nm mit dem Gehäuse (101);
Positionieren eines Köders (203), der ein Lockmittel in der Nähe des ultravioletten Lichts beinhaltet, wobei der Köder (203) fluoreszierende Eigenschaften aufweist, wobei das ultraviolette Licht und der Köder im Gehäuse eine synergistische Wirkung haben, die größer ist als eine Summe aus dem ultravioletten Licht allein und dem Köder allein;
Zuführen von Strom zu dem ultravioletten Licht; und
ferner umfassend das Positionieren einer Klebeplatte (308) in der Nähe des ultravioletten Lichts und des Köders (203).

10. Verfahren nach Anspruch 9, wobei die Stromversorgung mit einer Batterie (115) erfolgt.

## Revendications

1. Piège à insectes (100) comprenant :
un boîtier (101) ;
un dispositif à lumière ultraviolette d'une longueur d'onde maximale de 340 à 380 nm relié fonctionnellement au boîtier (101) ;
un appât (203) comprenant un attractif à proximité du dispositif à lumière ultraviolette, l'appât (203) ayant des propriétés fluorescentes, le dispositif à lumière ultraviolette et l'appât dans le boîtier ayant un effet synergique supérieur à la somme de l'effet du dispositif à lumière ultraviolette seul et de l'effet de l'appât seul ; et
comprenant en outre un panneau collant (308) à proximité de la lumière ultraviolette.

2. Piège à insectes (100) selon la revendication 1, le dispositif à lumière ultraviolette étant alimenté par une batterie (115).

3. Piège à insectes (100) selon la revendication 1 ou 2, l'appât (203) étant choisi dans le groupe comprenant un appât en bloc plein (203), un appât granulaire (203), d'appâts (203) en pellets, un appât liquide (203), une poche d'appât (203), un panneau collant (308) comprenant un appât (203), un appât (203) appliqué sur une surface du boîtier (101) et un appât (203) imprégné dans une surface du boîtier (101).

4. Piège à insectes (100) selon les revendications 1 à 3, comprenant :
un boîtier (101) comprenant une cavité et une ouverture permettant d'accéder à la cavité ;
un dispositif à lumière ultraviolette d'une longueur d'onde maximale de 340 à 380 nm relié fonctionnellement au boîtier (101) à l'intérieur de la cavité, le dispositif à lumière ultraviolette émettant de la lumière par l'ouverture du boîtier (101) ;
un appât (203) comprenant un attractif dans la cavité à proximité du dispositif à lumière ultraviolette ;
un panneau collant (308) placé dans la cavité.

5. Piège à insectes (100) selon les revendications 1 à 4, comprenant :
un boîtier (101) comportant une face avant (102), une face arrière (103), une face inférieure (104), une ouverture et une surface réfléchissante intérieure, l'ouverture étant dirigée vers le haut pour permettre à des insectes d'entrer, la face arrière étant conçue et disposée pour être montée sur une surface de montage ;
un dispositif à lumière ultraviolette d'une longueur d'onde maximale de 340 à 380 nm relié fonctionnellement au boîtier (101), le dispositif à lumière ultraviolette étant placé dans le boîtier (101) au-dessous d'un bord de l'ouverture dirigée vers le haut, la surface réfléchissante intérieure (11) dirigeant la lumière depuis le dispositif à la lumière ultraviolette sur la surface de montage en formant un motif de lumière diffuse sur la surface de montage ;
un appât (203) relié fonctionnellement à l'une au moins parmi la face avant (102), la face arrière (103) et la face inférieure (104).

6. Piège à insectes (100) selon la revendication 5, comprenant en outre un support placé entre deux ampoules reliées fonctionnellement au boîtier (101), l'appât (203) étant relié fonctionnellement à l'un au moins parmi la face avant (102), la face arrière (103), la face inférieure (104) et le support (105).

7. Piège à insectes (100) selon la revendication 5 ou 6, comprenant en outre un panneau collant (308) relié fonctionnellement à l'un au moins parmi la face avant (102), la face arrière (103), la face inférieure (104) et le support (105).

8. Piège à insectes (100) selon les revendications 5 à 7, le panneau collant (308) comprenant un attractif.

9. Procédé d'augmentation de l'efficacité d'un piège à insectes (100) selon les revendications 1 à 8, le piège à insectes (100) comprenant un boîtier (101), le procédé comprenant les étapes suivantes :
relier fonctionnellement un dispositif à lumière ultraviolette d'une longueur d'onde maximale de 340 à 380 nm au boîtier (101) ;
positionner un appât (203) comprenant un attractif à proximité du dispositif à lumière ultraviolette, l'appât (203) ayant des propriétés fluorescentes, le dispositif à lumière ultraviolette et l'appât placés dans le boîtier ayant un effet synergique supérieur à la somme de l'effet du dispositif à lumière ultraviolette seul et de l'effet de l'appât seul ;
alimenter le dispositif à lumière ultraviolette en énergie ; et
comprenant en outre l'étape suivante : positionner un panneau collant (308) à proximité du dispositif à lumière ultraviolette et de l'appât (203).

10. Procédé selon la revendication 9, l'alimentation étant effectué par une batterie (115).
